(19) Europäisches Patentamt
European Patent Office
Office européen des brevets

(11) **EP 1 304 255 B1**

(12) **EUROPÄISCHE PATENTSCHRIFT**

(45) Veröffentlichungstag und Bekanntmachung des Hinweises auf die Patenterteilung:
**30.05.2007   Patentblatt 2007/22**

(51) Int Cl.:
***B60N 2/28*** *(2006.01)*

(21) Anmeldenummer: **02009534.5**

(22) Anmeldetag: **26.04.2002**

(54) **Fahrzeug-Kindersitz**

Child car seat

Siège enfant pour véhicule automobile

(84) Benannte Vertragsstaaten:
**AT BE CH CY DE DK ES FI FR GB GR IE IT LI LU MC NL PT SE TR**

(30) Priorität: **22.10.2001   DE 20117074 U**

(43) Veröffentlichungstag der Anmeldung:
**23.04.2003   Patentblatt 2003/17**

(73) Patentinhaber: **Recaro GmbH & Co. KG**
**73230 Kirchheim/Teck (DE)**

(72) Erfinder: **Schräder, Margarete**
**96352 Marktleugast (DE)**

(74) Vertreter: **Küchler, Stefan**
**Patentanwalt**
**Postfach 11 93 40**
**90103 Nürnberg (DE)**

(56) Entgegenhaltungen:
**EP-A- 0 644 082      EP-A- 0 931 694**
**DE-A- 3 906 844      DE-U- 29 820 475**
**US-B1- 6 206 470**

EP 1 304 255 B1

**Beschreibung**

Die Erfindung richtet sich auf einen Fahrzeug-Kindersitz mit einer Sitzfläche, einer Rückenlehne und von dieser und/oder einer ggf. ausfahrbar daran angeordneten Kopfstütze etwa parallel zueinander oder voneinander divergierend nach vorne vorspringende, seitliche Stützflächen für den Kopf und/oder Torso des Kindes, wobei an der Rückseite der Rückenlehne oder einer ausfahrbar daran angeordneten Kopfstütze ein Element zur möglichst spielfreien Fixierung des Kindersitzes an dem Fahrzeug, insbesondere einer fahrzeugeigenen Kopfstütze, angeordnet ist, so dass dem Kindersitz allenfalls eine minimale Seitenbewegung gegenüber dem Fahrzeug erlaubt ist.

Nahezu alle Einrichtungen eines Fahrzeugs, bspw. Sitze, Armlehnen, Sicherheitsgurte, Türen etc. sind primär für erwachsene Personen ausgelegt und daher für Kinder insbesondere im Vorschulalter völlig ungeeignet. Aus diesem Grund werden bislang eine Vielzahl von Fahrzeug-Kindersitzen angeboten, die einerseits eine bequeme Körperhaltung und andererseits ausreichende Sicherheit insbesondere bei einem Frontalaufprall des betreffenden Fahrzeugs bieten. Hierbei gibt es Kindersitze mit eigenem Gurtsystem oder mit einem Fangkörper etwa vor dem Bauch des Kindes oder aber Kindersitze ohne ein eigenes Gurtsystem, wo das Kind zusammen mit dem Kindersitz über den fahrzeugeigenen Dreipunktgurt gesichert ist. All diese Sitze werden über das vorhandene Gurtsystem an dem Fahrzeug festgelegt und bieten daher bei einem Frontalaufprall ein hohes Maß an Sicherheit, da der fahrzeugeigene Sicherheitsgurt bei einem derartigen Aufprall sofort arretiert und dadurch nur eine mäßige Vorverlagerung des Kindes toleriert, so dass die Rückhaltesysteme ausreichenden Raum haben, um den Körper des Kindes vergleichsweise sanft aufzufangen.

Anders sind jedoch die Verhältnisse bei einem Seitenaufprall, bspw. durch ein anderes Fahrzeug, das möglicherweise gerade etwa auf Höhe des Kindersitzes in das betreffende Fahrzeug geschoben wird. In dieser Kraftrichtung ist eine Sofort-Arretierung der fahrzeugeigenen Gurte nicht vorgesehen. Andererseits versetzt bereits ein mit einer vergleichsweise langsamen Geschwindigkeit von 25 km/h in seitlicher Richtung aufprallendes Fahrzeug dem passiv beteiligten Fahrzeug einen derart starken Stoß, dass einerseits die Bodenhaftung der Räder vorübergehend verloren geht und das Fahrzeug seitlich zu rutschen beginnt und andererseits der betroffene Karosseriebereich mehr oder weniger stark eingedellt wird. Aufgrund des dem Fahrzeug unvermittelt erteilten Seitenimpulses kann die daraus folgende Seitenbewegung nur von fest an dem Chassis oder der Karosserie des Fahrzeugs festgelegten Gegenständen nachvollzogen werden, während andere Gegenstände danach trachten, aufgrund ihrer trägen Masse ihre Position quer zur Fahrtrichtung einzuhalten und sich dadurch relativ zu den starren Fahrzeugteilen in Richtung auf das auftreffende Fahrzeug hin verschieben. Es hat sich bei in jüngster Zeit von der Stiftung Warentest und anderen Organisationen durchgeführten Seitenaufpralltests herausgestellt, dass die Verankerung des Kindersitzes mittels eines fahrzeugeigenen Dreipunktgurtes aufgrund von dessen ausbleibender Sofort-Arretierung bei einem Seitenaufprall das dem Kindersitz eigene Beharrungsvermögen nicht beherrschen kann; der Kindersitz wird gegenüber der Karosserie des angefahrenen Fahrzeugs in Richtung auf das den Unfall auslösende Fahrzeug verschoben. Schließlich schlägt der Kindersitz gegen die betreffende Fahrzeugtür, und sobald er infolgedessen keine weitere Seitenbewegung mehr ausführen kann, prallt der Kopf und/oder Torso des Kindes mit großer Wucht gegen die Karosserie oder - falls vorhanden - seitliche Stützen des Kindersitzes. Der Spitzenwert dieser Aufprallwucht liegt bereits bei einem mäßigen Seitenaufprall deutlich über der 80fachen Erdbeschleunigung, einem Wert, dem ein Kinderkopf gerade noch einigermaßen unverletzt zu widerstehen vermag, wenn die Einwirkungsphase nicht länger als 3 Millisekunden ist. Man kann daraus erkennen, dass bereits im Stadtverkehr bei einem mäßigen Seitenaufprall, den alle erwachsenen Unfallteilnehmer unverletzt überstehen, in einem Kindersitz mitgenommene Kinder lebensgefährliche Verletzungen davontragen können. Aufgrund dieser Erkenntnisse ist beabsichtigt, Seitenaufpralltests in die künftige Sicherheitsprüfnorm ECE 44.04 einzuarbeiten. Derzeit ist allerdings kein Prinzip erkennbar, wie Fahrzeug-Kindersitze an die besonderen Anforderungen bei einem seitlichen Aufprallunfall angepaßt werden könnten.

Andererseits ist zwar in dem deutschen Gebrauchsmuster DE 298 20 475 U bereits vorgeschlagen worden, einen Kindersitz mit seinem oberen Bereich an einer Fahrzeug-Kopfstütze zu verankern. Der dortige Kindersitz hat jedoch nur minimale, seitliche Kopfstützen, die nicht in der Lage sind, eine größere Verformung auszuführen. Demnach prallt der Kinderkopf bei einem seitlichen Auffahrunfall entweder mit der vollen Wucht an diese seitlichen Kopfstützen mit der großen Gefahr von Schädelverletzungen, oder er rutscht an deren Vorderseite vorbei, und der gesamte Oberkörper des Kindes verwindet sich mit der Gefahr ernsthafter Wirbelsäulenschäden.

Aus den beschriebenen Nachteilen des bekannten Stands der Technik resultiert das die Erfindung initiierende Problem, einen gattungsgemäßen Fahrzeug-Kindersitz derart weiterzubilden, dass das Verletzungsrisiko eines damit in einem Fahrzeug beförderten Kindes auch bei einem seitlichen Aufprall bspw. durch ein anderes Fahrzeug auf für die Gesundheit des Kindes ungefährliche Werte abgesenkt werden kann.

Bei einem gattungsgemäßen Kindersitz gelingt die Lösung dieses Problems dadurch, dass die seitlichen Stützflächen für den Kopf und/oder Torso des Kindes derart elastisch ausgebildet sind, dass ihr vorderer Bereich bei einem seitlichen, durch einen Seitenauffahrunfall bedingten Anprall des Kinderkopfs und/oder -torsos elastisch um einen Weg x in der Größenordnung von 5 bis 15 cm nachzugeben vermag, um die Wucht des Anpralls über einen größeren Zeitraum zu verteilen und dadurch den Spitzenwert der auftretenden Kräfte zu reduzieren.

Diese Maßnahme dient dem Zweck, die Anprallphase des Kinderkopfs oder -torsos an der dafür vorgesehenen Seitenstütze des Kindersitzes und damit die auf das Kind einwirkenden Kräfte so frühzeitig als möglich beginnen zu lassen. Dadurch kann die Einwirkung auf das Kind über einen größeren Zeitraum verteilt werden, und die maximalen Belastungswerte lassen sich daher um etwa 40 bis 50 % reduzieren. Ein möglichst frühzeitiger Kontakt der Seitenstützen des Kindersitzes mit dem betreffenden Körperteil des Kindes wird durch eine möglichst spielfreie Seitenfixierung des Kindersitzes unabhängig von dem ggf. zusätzlich zur Rückhaltung verwendeten Dreipunktgurt erreicht. Diese Seitenfixierung kann der erfindungsgemäße Kindersitz bevorzugt an einer fahrzeugeigenen Kopfstütze finden, da diese über dafür vorgesehene Säulen an dem Fahrzeugchassis verankert ist und daher die dem Fahrzeug aufgezwungene Seitenbewegung unverzögert nachvollzieht. Da sich andererseits das Kind gegenüber dem Kindersitz in seitlicher Richtung begrenzt bewegen kann, wird es seinem Beharrungsbestreben folgend nach Bruchteilen einer Sekunde an den seitlichen Stützen des infolge eines Seitenauffahrunfalls urplötzlich seitlich verschobenen Kindersitzes anprallen. Dieser Anprall wird jedoch durch zwei Effekte gegenüber dem entsprechenden Anprall bei einem herkömmlichen Kindersitz abgemildert: Einerseits ist die dem angefahrenen Fahrzeug erteilte Seitenbewegung in dieser frühen Phase noch geringer als bei dem verzögerten Aufprall bei seitlich nicht fixiertem Kindersitz; darüber hinaus verbleibt zwischen dem Kindersitz und der Fahrzeugtür bzw. einem auf Höhe des Sitzes befindlichen Karosserieholm od. dgl. genügend Raum, so dass die seitliche Stützfläche des Kindersitzes in begrenztem Umfang nach außen federn kann, um während dieser Ausweichbewegung den eigentlichen Anprall auf ein möglichst großes Zeitintervall zu verteilen. Die ausgeprägten, seitlichen Kopf- oder Torsostützen des erfindungsgemäßen Kindersitzes erstrecken sich von der Rückenlehne des Kindersitzes um ein Maß I von wenigstens 8 cm, vorzugsweise von mehr als 10 cm, insbesondere von mehr als 12 cm nach vorne, so dass der Kopf oder Torso des Kindes nicht an dessen Vorderseite vorbeirutschen kann. Gleichzeitig sind diese langen Seitenstützen in der Lage, eine große Seitenbewegung x auszuführen und dem Kinderkörper dabei eine kontrollierte Seitenbewegung zu erlauben, während der die Aufprallenergie allmählich abgebaut wird. Die noch verbleibende Aufprallenergie zwischen Kinderkörper und -sitz kann durch eine an der Innenseite der erfindungsgemäßen Seitenstützen angeordnete Polsterung großflächig auf den Kinderkörper übertragen werden, so dass bei leichteren Unfällen selbst Blutergüsse vermieden werden.

Es hat sich als günstig erwiesen, dass das Fixierungselement als an die geometrischen Gegebenheiten eines Fahrzeugs anpaßbar ausgebildet ist. Dem Fixierungselement obliegt es, einen möglichst innigen, d. h. spielfreien Kontakt zwischen dem Fahrzeugchassis und dem erfindungsgemäßen Kindersitz herzustellen. Dieser Kontakt sollte bei allen Fahrzeugtypen unabhängig von deren geometrischen Einzelheiten möglichst optimal sein, da nur dann eine ausreichende Dämpfung des Anpralls zwischen Kinderkörper und -sitz gewährleistet ist. Dabei ist vor allem darauf zu achten, dass dieser Kontakt gerade auch bei seitlichen Relativbewegungen möglichst eng ist. Zu diesem Zweck kann es vorteilhaft sein, die Rückenlehne oder das sonstige, mit dem Fixierungselement verbundene Teil des Kindersitzes möglichst nahe an den potentiellen Verankerungspunkt des Fahrzeugs heranzuführen, damit diesem möglichst keinerlei Schwenkbewegung um den Verankerungspunkt erlaubt ist. Entsprechend kurz sollten dann auch die Verbindungen zwischen dem Fixierungselement und dem Kindersitz ausgebildet sein bzw. durch eine Verstellmöglichkeit an das betreffende Fahrzeug anpassbar sein.

Bevorzugt ist das Fixierungselement für das (gemeinsame) Umgreifen der Verankerungssäule(n) einer Kopfstütze ausgelegt. Da dem Fixierungselement die Aufgabe obliegt, den Kindersitz gegenüber dem Fahrzeugchassis festzulegen, bieten die metallischen Verankerungssäulen einer Kopfstütze bessere Bedingungen als die gepolsterte Fahrzeug-Kopfstütze selbst, deren Polster eine unerwünschte Bewegungsfreiheit zur Folge hätte. Bei Vorhandensein von mehr als einer Verankerungssäule einer fahrzeugeigenen Kopfstütze wird empfohlen, zwei derartige Verankerungssäulen gemeinsam zu umgreifen, um auch durch die Seitenbeanspruchung auftretende Drehmomente auffangen und in das Fahrzeugchassis einleiten zu können.

Im Rahmen einer ersten Ausführungsform der Erfindung ist das Fixierungselement als Gurt ausgebildet. Ein Gurt, wobei etwa an ein mit der Beschaffenheit von Sicherheitsgurten mehr oder weniger identisches Produkt zu denken ist, ist einerseits leicht und sehr reißfest, kann darüber hinaus einen Verschluß aufweisen, um ihn ohne Demontage einer Kopfstütze an deren Verankerungssäulen festlegen und davon auch wieder lösen zu können, und kann überdies einen Längenverstellmechanismus aufweisen, um an unterschiedliche Kopfstützen bzw. - verankerungssäulen und insbesondere unterschiedliche Abstände zwischen letzteren anpassbar zu sein.

Die beiden Enden des Fixierungsgurts sind zur lösbaren Verbindung mit ineinandergreifenden Verschlüssen versehen, welche das Öffnen des Fixierungsgurtes zwecks Umschlingens einer fahrzeugeigenen Kopfstütze erlauben.

Um in Abhängigkeit vom Fahrzeugtyp schwankende Abstände der Kopfstützen zu den Verankerungssäulen ausgleichen zu können, sollte die Länge des Fixierungsgurts und/oder einer von diesem gebildeten Schlaufe verstellbar sein.

Dieser Erfindungsgedanke lässt sich dadurch ergänzen, dass der Fixierungsgurt an der Rückseite der Rückenlehne oder einer ausfahrbar daran angeordneten Kopfstütze festgeklemmt ist, bspw. mittels einer von einer Schraube durchgriffenen Ringscheibe. Durch eine derartige, flächige Verbindung des Gurtes mit einem Teil des Kindersitzes werden lokale Überbeanspruchungen des letzteren vermieden.

Das Fixierungselement kann andererseits auch als Bügel ausgebildet sein. Ein derartiger Bügel kann aus einem steifen Werkstoff hergestellt sein, insbesondere aus Metall, und bietet dabei gegenüber einem Gurt den Vorteil, dass durch eine individuelle, auf bestimmte Kopfstützen-Typen eingestellte Bügelgeometrie Relativbewegungen zwischen Kindersitz und Fahrzeugchassis vollständig eliminiert werden können. Dabei ist der Begriff "Bügel" weit zu fassen, damit können bspw. auch Elemente gemeint sein, welche die beiden Verankerungssäulen einer Kopfstütze getrennt umschließen, so dass im Grunde eigentlich zwei Bügel vorhanden sind.

Ferner ist es möglich, dass der Bügel ein- oder beidseitig und/oder in seinem Mittelbereich mit der Rückseite der Rückenlehne oder einer ausfahrbar daran angeordneten Kopfstütze verbunden oder verbindbar ist. Je nach Ausführungsform kann der Bügel dabei zum Umgreifen einer oder mehrerer Kopfstützen-Verankerungssäulen ausgebildet sein. Andererseits müssen bei dieser Ausführungsform die Verankerungssäulen der Kopfstütze nicht vollständig umschlossen werden. Wenn bspw. der Bügel über einen breiten Mittelsteg mit dem Sitz verbunden ist, wobei die Breite des Mittelstegs etwa dem Abstand zwischen den Verankerungssäulen entspricht, so ist es nicht erforderlich, diese auch an den jeweiligen Außenseiten zu umgreifen. Vielmehr können bei dieser Ausführungsform die beiden Bügelenden gegenüber dem Stegmittelteil entgegen nach außen drückender Federkräfte einschiebbar sein, damit der Bügel zwischen den Verankerungssäulen der Kopfstütze hindurchgeschoben werden kann. Wenn die Bügelenden bspw. an ihrer in Sitzrichtung hinten liegenden Kante nach außen abgeschrägt verlaufen, kann ein Sitz einfach durch Eindrücken des rückwärtigen Bügels zwischen die Verankerungssäulen einer fahrzeugeigenen Kopfstütze geschoben und dann selbsttätig festgelegt werden.

Es hat sich bewährt, den Bügel mit einem Öffnungs- bzw. Schließmechanismus zu versehen, bspw. einem Schwenk- und/oder Rastmechanismus. Hierbei kann es sich einerseits um den oben beschriebenen Verschiebemechanismus handeln, darüber hinaus ist aber auch an einen aufschwenkbaren Bügel zu denken, dessen freies Ende nach Umgreifen der Verankerungssäulen einer fahrzeugeigenen Kopfstütze an die Rückseite des Kindersitzes herangeschwenkt werden kann und dort ggf. mit einem Rastmechanismus od. dgl. verriegelbar ist.

Eine wiederum abgewandelte Ausführungsform der Erfindung zeichnet sich dadurch aus, dass das Fixierungselement als sich von der Rückseite des Kindersitzes zumindest bereichsweise etwa horizontal entgegen der Sitzrichtung erstreckende Platte mit einer oder mehreren Ausnehmungen zum Hindurchstecken der Verankerungssäule(n) einer fahrzeugeigenen Kopfstütze ausgebildet ist. Hierbei handelt es sich um äußerst einfaches, in sich starres Fixierungselement, das ausschließlich dadurch an einer Kopfstütze appliziert werden kann, dass diese zusammen mit den Verankerungssäulen von deren Halterungsmuffen gelöst wird, sodann die Verankerungssäulen durch entsprechende Ausnehmungen in der Fixierungsplatte gesteckt und schließlich wieder in die dafür vorgesehenen Aufnahmemuffen des Fahrzeugsitzes eingeschoben werden. Da andererseits bei fast allen Fahrzeugtypen die Kopfstütze lösbar sind, eignet sich diese Ausführungsform für alle gängigen Fahrzeugtypen und ist andererseits aufgrund ihres einfachen Aufbaus in höchstem Maße zuverlässig. Sofern die Platte in dem Bereich ihrer Ausnehmungen eine hinreichende Stärke aufweist oder mit eingesetzten, bspw. eingeschweißten Muffen in Längsrichtung der Verankerungssäulen verstärkt ist, so lässt sich dadurch der Kindersitz mit einer einzigen Arretierung im Bereich der fahrzeugeigenen Kopfstützen insgesamt stabilisieren und kann daher bei einem Seitenanprall weder in seinem oberen Bereich noch im Bereich der Sitzfläche seitlich ausweichen.

Solchenfalls ist eine Vereinfachung der Konstruktion dadurch möglich, dass die Fixierungsplatte als Winkel ausgebildet ist mit einem Schenkel zur Verankerung an dem Fahrzeug und einem zu der Rückseite des Kindersitzes etwa parallelen Schenkel, der mit dem Kindersitz bspw. über Schrauben verbunden ist. Die Schrauben können an der Vorderseite des Kindersitzes in einem vertieften Bereich der Sitzschale versenkt sein, so dass sie von einem Kind nicht spürbar sind.

Um bei einem seitlichen Anprall des Kindes ein definiertes Zurückweichen der betreffenden Stützfläche zu ermöglichen, sollten die seitlichen Stützflächen des Kindersitzes einen Verformungs-, Schwenk- und/oder Verstellbereich aufweisen, Durch einen derartigen Verformungs-, Schwenk- und/oder Verstellbereich kann das Verhalten der seitlichen Stützflächen des Kindersitzes bei einem Seitenauffahrunfall exakt vorbestimmt werden. Wenn ein Verformungs- oder Schwenkbereich bspw. entlang der Übergangskante der seitlichen Stützflächen zu der Rückenlehne oder einer darin aufgenommen Kopfstütze angeordnet ist, so können die seitlichen Stützflächen unter Belastung mit ihren vorderen Bereichen ausschwenken, während der rückwärtige Bereich infolge seiner Verbindung mit der Rückenlehne oder Kopfstütze sich nur um ein geringes Maß bewegen kann. Die betreffende Stützfläche nimmt daher unter Belastung einen relativ flachen Winkel gegenüber der Rückenlehne oder Kopfstütze ein. Es gelingt der Stützfläche dabei, unter Aufnahme und elastischer Speicherung von Energie den Anprallwinkel des Kinderkörpers gegen die betreffende Stützfläche abzuflachen und damit dessen Bewegungsrichtung etwa in die Fahrtrichtung umzulenken. Dadurch kann die eigentliche Vernichtung der Bewegungsenergie dem zusätzlich vorhandenen Dreipunkt- oder Beckengurt übertragen werden, der die von den erfindungsgemäßen Stützflächen bewirkte Vorverlagerung des Kinderkörpers abbremst und begrenzt.

Erfindungsgemäß ist weiterhin vorgesehen, dass der Verformungsbereich durch eine bereichsweise, querschnittliche Schwächung der Rückenlehnenschale und/oder einer ggf. ausfahrbar daran angeordneten Kopfstütze bzw. der Wandung(en) eines diese Elemente bildenden Hohlkörpers definiert ist. Der Verformungsbereich zeichnet sich sozusagen durch eine verminderte Steifheit aus, was sich herstellungstechnisch gerade bei Spritzgußteilen oder Blasformteilen aus Kunststoff mit wenig Zusatzaufwand realisieren lässt.

Ein Schwenkbereich lässt sich bspw. durch ein Gelenk realisieren. Eine derartige Konstruktion kann zwar herstellungstechnisch etwas aufwendiger sein, andererseits können Gelenke in höchstem Grade stabil ausgeführt werden.

Eine andere, definierte Verstellmöglichkeit lässt sich durch ein (Linear-) Führungselement vorgeben. Solchenfalls kann die betreffende Stützfläche insgesamt nach außen ausweichen, so dass sie unabhängig von der Körperhaltung des Kindes während eines Seitenauffahrunfalls eine stets gleichbleibende Wirkung entfaltet.

Ein weiteres, erfindungsgemäßes Merkmal besteht darin, dass die seitlichen Stützflächen des Kindersitzes über ein elastisches Element gegenüber der Rückenlehnenschale und/oder einer ggf. ausfahrbar daran angeordneten Kopfstütze abgestützt sind. Diesem elastischen Element obliegt es, in kräftefreiem Zustand unter Entspannung die betreffende Stützfläche etwa nach vorne weisend auszurichten und andererseits im Fall eines seitlichen Anpralls des Kinderkörpers gegen die betreffende Stützfläche durch kontrolliertes Zurückweichen derselben die Wucht des Anpralls zu mindern. Das elastische Element ist derart ausgebildet, dass es selbst bei einer starken Auslenkung x im vorderen Bereich der betreffenden Seitenstütze von bspw. 15 cm nicht überlastet wird und anschließend die seitliche Stütze wieder in deren Ausgangsstellung zurückführt.

Zur Erzeugung eines elastischen Verhaltens können elastische Werkstoffeigenschaften der Rückenlehnenschale und/oder einer ggf. ausfahrbar daran angeordneten Kopfstütze bzw. der Wandung eines diese bildenden Hohlkörpers genutzt werden. Dies gilt in besonderem Maße für einen Kindersitz aus Kunststoffspritzgußteilen oder -blasformteilen.

Eine andere Möglichkeit besteht darin, ein oder mehrere Federelemente einzusetzen, welche jeweils zwischen der beweglichen Seitenstütze und einer Rückenlehnenschale oder einer ggf. ausfahrbar daran angeordneten Kopfstütze geschalten sind. Derartige, eigens für die Seitenaufpralldämpfung vorgesehene Federelemente erhöhen zwar den konstruktiven Aufwand des erfindungsgemäßen Kindersitzes, lassen sich jedoch mit hoher Präzision anfertigen bzw. selektieren, um ein optimales Dämpfungsverhalten zu erzielen.

Eine optimale Aufpralldämpfung eines Kindersitzes ergibt sich, wenn die im vorderen Bereich der seitlichen Kopfstützen effektiv wirksame Federkonstante $c_{eff}$ = F / x des elastischen Elements zur Abstützung im Kopfbereich zwischen 5 und 40 kN/m liegt, vorzugsweise über 7,5 kN/m und/oder unter 30 kN/m, insbesondere über 10 kN/m und/oder unter 20 kN/m; bei einem elastischen Element zur Abstützung im Torsobereich haben sich Werte zwischen 10 kN/m und 140 kN/m bewährt, vorzugsweise über 15 kN/m und/oder unter 100 kN/m, insbesondere über 20 kN/m und/oder unter 60 kN/m. Hierbei ergibt sich ein mittlerer Wert von etwa 20 kN/m, wenn es den Kopf eines Kindes seitlich abzustützen gilt, während für den Torso eines Kindes eine höhere Federkonstante erforderlich sein kann, um das erhöhte Gewicht des Torsos sicher aufzufangen.

Hierbei sind die Auslenkung x und die Kraft F in dem vorderen Bereich der betreffenden Seitenstütze zu zählen, also in einem Abstand a von der (ggf. gedachten) Schwenkachse. Während bei linear geführten Stützen für die tatsächlich erforderliche Federkonstante $c_{real}$ eines elastischen Elements $c_{real}$ = $c_{eff}$ gesetzt werden kann, bleibt bei einer verschwenkenden Stütze das Drehmoment konstant, und die Kraft verhält sich umgekehrt proportional zu dem Abstand a von der Schwenkachse, während die Auslenkung etwa proportional dazu ist. Die tatsächlich erforderliche Federkonstante $c_{real}$ eines elastischen Elements hängt in diesem Fall demnach von seinem Abstand d zu der Schwenkachse ab:

$$c_{real} \, / \, c_{eff} = (l \, / \, a)^2.$$

Um Materialüberlastungen zu vermeiden, sollte daher das elastische Element ausreichend von der Schwenkachse beabstandet werden. Dies kann bspw. bei Verwendung elastischer Eigenschaften der Kopf- oder Rückenlehnenschale dadurch erreicht werden, dass zwischen vorderer und hinterer Schalenhaut ein möglichst großer Abstand z eingehalten wird. Dadurch hat wenigstens eine Schalenhaut einen Abstand von z/2 von der Schwenkachse; die andere kann sodann schlimmstenfalls als Schwenkachse dienen. Da die (virtuelle) Schwenkachse sich immer in der Nähe des am wenigsten verformbaren Bereichs ausbildet, bestimmt demnach vor allem der schwächere Bereich die Elastizität. Haben beide Schalenbereiche etwa die gleiche Stärke so liegt die Schwenkachse etwa zwischen beiden, und beide tragen etwa gleichermaßen zur elastischen Abfederung bei. Da hierdurch das Material am wenigsten beansprucht wird, wird diese Ausführungsform empfohlen.

Der Abstand z kann gegenüber dem normalen Schalenflächenabstand d einerseits dadurch erhöht werden, dass die Schale zur Ausbildung der Seitenstützen in einem weiten Bogen mit einem mittleren Radius $r_m \approx$ r + d/2 (r: Krümmungsradius des inneren Schalenbereichs) nach vorne geführt ist. Sofern

$$r_m > d \text{ bzw. } r > d/2,$$

bspw.

$$r_m / d > 1{,}5 \text{ bzw. } r > d,$$

so erhöht sich aufgrund trigonometrischer Verhältnisse der lotrecht zur Rückenlehne zu messende Abstand z in diesem Kurvenbereich. Der mittlere Radius $r_m$ kann dabei innerhalb eines Bereichs von bspw. 2 cm bis 20 cm, vorzugsweise 3,5 cm bis 17,5 cm, insbesondere 5 cm bis 10 cm, liegen.

Eine weitere Möglichkeit zur Vergrößerung von z besteht darin, den Krümmungsradius R des äußeren, d.h. hinteren Schalenbereichs kleiner zu bemessen als die Summe aus dem Krümmungsradius r des vorderen Schalenbereichs zuzüglich der "normalen" Schalenstärke d. Wenn bspw. R ≈ r, so erhöht sich der Abstand zwischen den beiden Schalenbereichen lokal auf bis zu etwa 2*d.

Eine Polsterung an den Innenseiten der seitlichen Stützflächen für den Kopf und/oder Torso des Kindes soll einerseits ein angenehmes Empfinden während des normalen Gebrauchs hervorrufen und andererseits bei einem seitlichen Anprall blaue Flecken oder gar Schürfwunden vermeiden.

Schließlich entspricht es der Lehre der Erfindung, dass der Kindersitz zusätzlich mit einem fahrzeugeigenen Dreipunkt- oder Beckengurt fixierbar ist. Nach der Lehre der Erfindung wird der Kindersitz durch das Fixierungselement vor allem in seinem oberen Bereich verankert, könnte sich jedoch ohne zusätzliche Fixierung im unteren Bereich insbesondere bei einem Frontalaufprall evtl. in begrenztem Umfang bewegen, so dass hier eine zusätzliche Verankerung am fahrzeugeigenen Gurtsystem wünschenswert ist. Ob dieses Gurtsystem darüber hinaus auch als Rückhaltesystem für das betreffende Kind Verwendung findet, kann dahingestellt bleiben.

Weitere Merkmale, Einzelheiten, Vorteile und Wirkungen auf der Basis der Erfindung ergeben sich aus der folgenden Beschreibung bevorzugter Ausführungsformen der Erfindung sowie anhand der Zeichnung. Diese zeigt in:

Fig. 1     eine perspektivische Ansicht eines Fahrzeug-Kindersitzes;

Fig. 2     das Detail II aus Fig. 1;

Fig. 3     eine Seitenansicht auf den Kindersitz aus Fig. 1 in eingebautem Zustand;

Fig. 4     einen Schnitt durch die Fig. 3 entlang der Linie IV - IV;

Fig. 5     das Detail V aus Fig. 4;

Fig. 6     das Detail VI aus Fig. 4;

Fig. 7     eine Draufsicht auf die Fig. 3 bei dem üblichen Gebrauch durch ein Kind; sowie

Fig. 8     eine der Fig. 7 entsprechende Darstellung, aus der die Vorgänge bei einem Seitenauffahrunfall zu entnehmen sind.

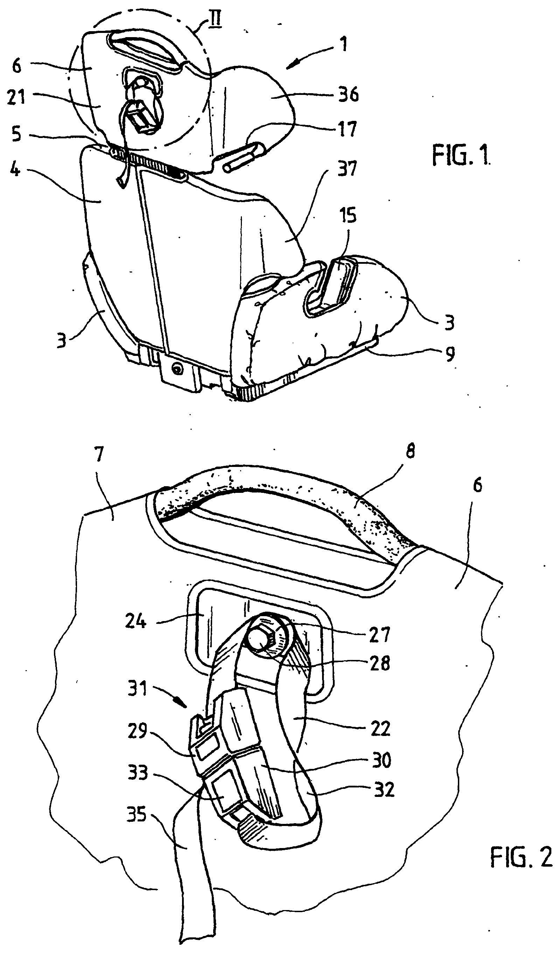

Der in Fig. 1 wiedergegebene Kindersitz 1 verfügt über eine Sitzfläche 2 mit zwei seitlichen Armlehnen 3 und über eine Rückenlehne 4 mit einer in deren oberen Bereich 5 ausziehbar, d. h. höhenverstellbar, angeordneten Kopfstütze 6. An deren oberen Bereich 7 ist ein Tragbügel 8 für den Transport des Kindersitzes 1 angeordnet.

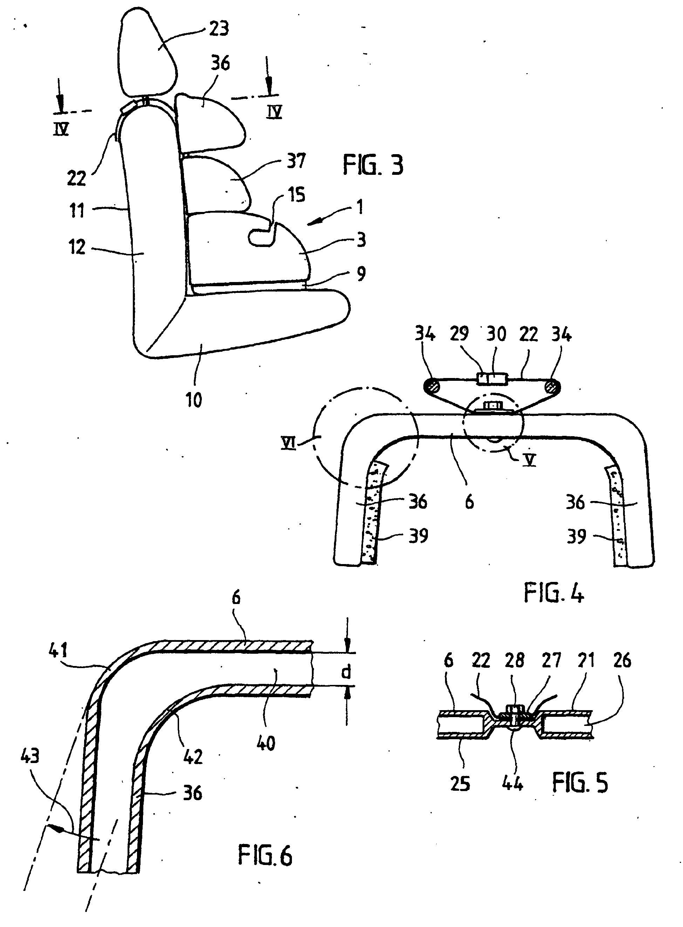

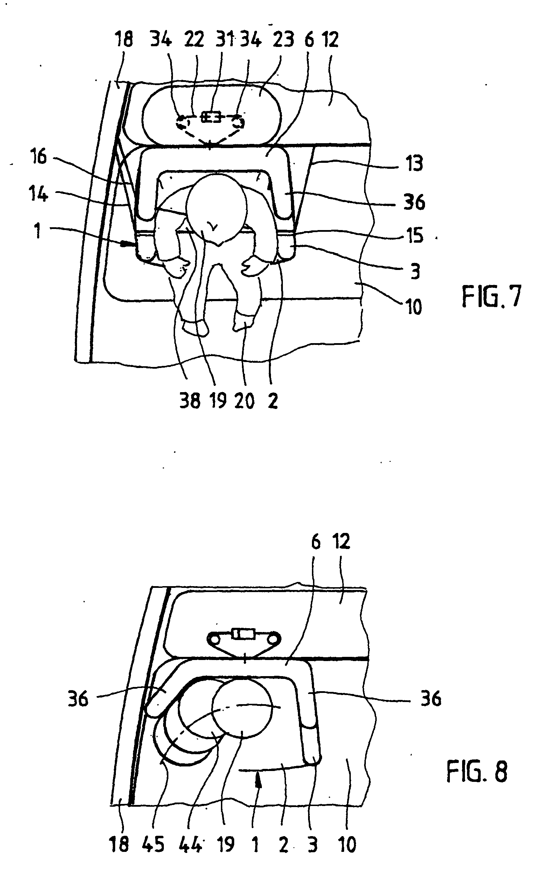

Zum Gebrauch wird der Kindersitz 1 mit seiner Unterseite 9 auf das Sitzpolster 10 eines Kraftfahrzeugsitzes 11 gestellt und mit seiner Rückenlehne 4 an das fahrzeugeigene Lehnenpolster 12 angelehnt, wie dies in Fig. 3 dargestellt ist. Wie in Fig. 7 angedeutet, wird der Kindersitz 1 in dieser Position mit einem Dreipunktgurt 13 an dem Fahrzeug festgelegt, wobei der Beckengurt 14 durch dafür vorgesehene, oberseitige Vertiefungen 15 in den Armlehnen 3 des Kindersitz 1 geführt wird, während der obere Bereich des Schultergurtes 16 durch eine schlitzartige Ausnehmung 17 an der Kopfstütze 6 geführt wird. Dadurch wird der Kindersitz 1 mitsamt einem darauf sitzenden Kind bei einem Frontalaufprall des betreffenden Fahrzeugs gegenüber einer Vorverlagerung zuverlässig gesichert, indem solchenfalls die Gurtstraffer aktiviert werden und somit den Sitz 1 zurückhalten.

Es hat sich jedoch gezeigt, dass eine derartige Befestigung mittels des fahrzeugeigenen Dreipunktgurtes 13 bei einem Seitenaufprall auf das betreffende Fahrzeug nicht ausreicht, da solchenfalls die Gurtstraffer nicht zu einer Blockierung des Dreipunktgurtes führen. Der Kindersitz 1 bleibt daher locker auf dem Fahrzeugsitz 11 und macht dessen plötzliche, durch den Seitenaufprall ausgelöste Seitenbewegung nicht mit, verlagert sich daher gegenüber der Fahrzeugkarosserie 18 in Richtung auf den auftreffenden Gegenstand. Sobald der Kindersitz 1 an einem Karosserieteil 18 anstößt, wird er von diesem mitgenommen, und diese Beschleunigung ist so stark, dass der Kopf 19 des Kindes 20 mit einer viel zu großen Wucht auf ein seitliches Teil der Kopfstütze 6 oder gar auf die Fahrzeugkarosserie 18 aufprallen würde.

Um dies zu verhindern, ist an der Rückseite 21 der Kopfstütze 6 des Kindersitzes 1 ein zusätzlicher Fixierungsgurt 22 verankert, mit dem der Kindersitz 1 zusätzlich an der fahrzeugeigenen Kopfstütze 23 festlegbar ist.

Der Fixierungsgurt 22 ist vergleichsweise kurz, bspw. insgesamt nur 15 bis 30 cm lang, und er ist etwa in seinem Mittelbereich an dem Kindersitz 1 festgelegt, insbesondere festgeklemmt. Vorzugsweise sind hierzu in dem Verankerungsbereich 24 muldenförmige Vertiefungen in der Rückseite 21 und in der Vorderseite 25 der Kindersitz-Kopfstütze 6 vorgesehen. Dies kann bspw. dadurch realisiert sein, dass die ansonsten durch einen Hohlraum 26 voneinander getrennte Vorder- und Rückwand 25, 21 einer als Blasformteil aus Kunststoff gespritzten Kopfstütze 6 muldenförmig einander angenähert sind, so dass sie mit ihren innenliegenden Flächen direkt aneinanderliegen. In diesem Bereich sind die Vorder- und Rückwand 25, 21 der Kopfstütze 6 durchbohrt und von einer Schraube 44 durchsetzt, deren Schaft in der rückwärtigen Mulde 24 nach außen mündet und hier ein Loch des Fixierungsgurtes 22 durchgreift. Sodann ist eine Ringscheibe 27 aufgesteckt, deren Durchmesser etwa der Breite des Fixierungsgurtes 22 entspricht, und schließlich sorgt eine Mutter 28 oder ein sonstiges, aufgeschraubtes Gewindeteil für eine formund reibschlüssige Verbindung des Fixierungsgurtes 22 mit der Kopfstütze 6 des Kindersitzes 1.

Im Bereich der beiden Enden des Fixierungsgurtes 22 ist je ein Teil 29, 30 eines Gurtschlosses 31 angeordnet, mit dem die beiden Enden des Fixierungsgurtes 22 aneinander festgelegt werden können. Ein oder beide Teile 29, 30 des Gurtschlosses 31 können gegenüber dem betreffenden Ende des Fixierungsgurtes 22 verschieb- und arretierbar ausgebildet sein, um die Länge der geschlossenen Gurtschlaufe 32 den jeweiligen Gegebenheiten anpassen zu können. Durch einen Druckknopf 33 können die beim Zusammenstecken einfach einrastenden Schließteile 29, 30 wieder voneinander gelöst werden. Dieser Mechanismus kann ähnlich oder identisch dem Schloß eines Dreipunkt-, Becken- oder Hosenträgergurtes ausgebildet sein.

Zum Gebrauch des Kindersitzes 1 werden die beiden Enden des Fixierungsgurtes 22 voneinander gelöst, um die beiden Verankerungssäulen 34 der fahrzeugeigenen Kopfstütze 23 herumgeführt und sodann mittels des Gurtschlosses 31 miteinander verbunden. Schließlich kann durch Ziehen an einem (verstellbaren) Gurtende 35 das betreffende Schließteil 29 zu dem Mittelbereich des Fixierungsgurtes 22 hin bewegt werden, um die Länge der Gurtschlaufe 32 soweit zu verkürzen, wie dies der Abstand der Verankerungssäulen 34 der fahrzeugeigenen Kopfstütze 23 zuläßt. Dadurch ist eine seitliche Verschiebung der Kopfstütze 6 des Kindersitzes 1 gegenüber der fahrzeugeigenen Kopfstütze 23 nur noch innerhalb eines kleinsten Spielraums möglich, so dass der Kindersitz 1 auch bei einem seitlichen Aufprall eines Gegenstandes an das betreffende Fahrzeug seine Position gegenüber dem betreffenden, fahrzeugeigenen Sitz 11 nahezu unverändert beibehält.

Ein weiterer Bestandteil des erfindungsgemäßen Sicherheitssystems gegenüber Seitenauffahrunfällen sind seitliche Stützen 36, 37 für den Kopf 19 bzw. Torso 38 des Kindes 20, die sich zu diesem Zweck seitlich an die Kopfstütze 6 bzw. an die Rückenlehne 4 des Kindersitzes 1 anschließen. Bei der dargestellten Ausführungsform divergieren die seitlichen Kopf- und Torsostützen 36, 37 in Sitzrichtung gesehen geringfügig voneinander, bspw. mit einem Öffnungswinkel von 10° bis 30°. Zur Verbesserung der Armfreiheit können die seitlichen Torsostützen mit einem noch größeren Öffnungswinkel realisiert sein. Die Erstreckung dieser seitlichen Stützen in Sitzrichtung kann etwa zwischen 10 und 20 cm schwanken. Die Grundfläche einer derartigen Seitenstütze 36, 37 kann etwa einem Halb- oder Viertelkreis entsprechen, es sind jedoch auch andere Gestaltungen denkbar.

Vorzugsweise sind diese Seitenstützen 36, 37 mit der Kopfstütze 6 bzw. der Rückenlehne 4 integral ausgebildet, nämlich jeweils einstückig in Form eines Blasformteils mit einem gemeinsamen Hohlraum, wie dies für die Kopfstütze 6 mit integrierten Seitenstützen 36 in den Figuren 4 und 6 zu sehen ist. Bei dieser Ausführungsform hat die Kopfstütze 6 etwa die Form eines U, dessen breiter Mittelsteg die übliche Funktion einer Kopfstütze erfüllt, während die Seitenschenkel als Seitenstützen 36 ausgebildet sind. Wie die übrigen, dem Sitzbereich zugekehrten Oberflächen des Kindersitzes 1, insbesondere der Rückenlehne 4 und der Sitzfläche 2, können auch die dem Kopf 19 des Kindes 20 zugekehrten Innenflächen der Seitenstützen 36 mit einem weichen, dämpfenden Belag 39, bspw. in Form einer Schaumstoffschicht, versehen sein.

Wie die Fig. 6 zeigt, verjüngt sich die Wandstärke des Blasformteils, das den Mittelsteg 40 der Kopfstütze 6 und die daran anschließenden Seitenstützen 36 bildet, im Bereich des Übergangs 41, 42, so dass hier die Steifheit des Kopfstützenteils 6 reduziert ist. Auf diesem Weg ergibt sich eine Gelenkfunktion, die unter Belastung ein Ausschwenken 43 der betreffenden Seitenstütze 36 erlaubt. Andererseits weisen die Krümmungsbereiche 41, 42 keine auch nur nährungsweise koaxiale Krümmungsachse auf, sondern der Krümmungsradius des äußeren Krümmungsbereichs 41 liegt bei dem dargestellten Ausführungsbeispiel sogar außerhalb der konvexen Oberfläche der innenliegenden Krümmung 42. Der gemeinsame Hohlraum 26 des gesamten Blasformteils hat im Bereich des Mittelstegs 40 etwa dieselbe Stärke d wie im Bereich der Seitenstützen 36; diese Stärke erhöht sich jedoch in dem Übergangsbereich 41, 42 auf nahezu den doppelten Wert, da der Krümmungsradius R des außenliegenden Übergangsbereichs 41 kleiner ist als die Summe aus dem Krümmungsradius r des innenliegenden Übergangsbereichs 42 zuzüglich der mittleren Hohlraumstärke d:

$$R < r + d.$$

Dies führt dazu, dass bei einem Ausschwenken 43 einer Seitenstütze 36 entweder die innenliegende Faser 42 gedehnt werden müßte oder sich die außenliegende Faser 41 verstärkt nach außen durchwölbt. Da hierunter die gesamte Geometrie des Kopfstützenblasformteils 6 leidet, erfährt die Seitenstütze 36 eine erhebliche, rückstellende Kraft, so dass von dem Übergangsbereich 41, 42 die Funktion eines Gelenks mit Rückstellfeder übernommen wird. Dabei kann durch die geometrische Gestaltung der Übergangsbereiche 41, 42, insbesondere der Radien r, R, die Federkonstante c dieser Rückstellfederung beeinflußt werden.

Die Torso-Seitenstützen 37 sind nach demselben Prinzip an der Rückenlehne 4 begrenzt beweglich sowie abgefedert angeformt.

Die Wirkungsweise der seitlichen Kopf- und Torsostützen 36, 37 wird unter Bezugnahme auf die Figuren 7 und 8 erläutert:

Während der normalen Fahrt befindet sich der Kindersitz 1 samt dem darin sitzenden Kind 20 etwa mittig auf dem Fahrzeugsitz 11 und wird in dieser Position sowohl durch den fahrzeugeigenen Dreipunktgurt 13 als auch insbesondere durch den Fixierungsgurt 22 gehalten. Fährt nun bspw. ein anderes Fahrzeug seitlich von links kommend gegen die Karosserie 18 des betreffenden Fahrzeugs, so erfährt dieses eine schlagartige Beschleunigung quer zur Fahrtrichtung, weil die Autoreifen vorübergehend den seitlichen Halt gegenüber der Fahrbahn verlieren. Diese starke Seitenbeschleunigung macht der Kindersitz 1 unverzögert mit, da er straff an der Kopfstütze 23 des fahrzeugeigenen Sitzes 11 festgelegt ist und daher kaum seitlichen Spielraum aufweist. Das Kind 20 kann allerdings im ersten Moment diese plötzliche Seitenbewegung nicht nachvollziehen und wird deshalb innerhalb seines Kindersitzes 1 entgegen der Aufprallrichtung zur Karosserie 18 hin verschoben, bis es mit seinem Torso 38 oder seinem Kopf 19 gegen die seitliche Torsostütze 37 und/oder Kopfstütze 36 prallt.

Da im Gegensatz zu bisher bekannten Sitzen der Kindersitz 1 nach wie vor etwa mittig auf dem fahrzeugeigenen Sitz 11 steht, weist er in diesem Moment immer noch einen großen Abstand zu der Fahrzeugkarosserie oder -tür 18 auf. Dadurch und auch wegen der gelenkartigen Ausgestaltung der Übergangsbereiche 41, 42 der betreffenden Seitenstütze 36 gegenüber dem Mittelsteg 40 der Kopfstütze 6 ist es der Seitenstütze 36 möglich, beim Aufprall des Kopfes 19 des Kindes 20 seitlich nachzugeben und auszuschwenken, wie dies in Fig. 8 zu sehen ist.

Andererseits ergibt sich aufgrund der federartig ausgestalteten Geometrie der Übergangsbereiche 41, 42 eine rückstellende Kraft, die um so größer ist, je stärker die Seitenstütze 36 ausgelenkt wird. Aufgrund dieser Charakteristik ergibt sich ohne Anstoß an die Karosserie 18 des Fahrzeugs ein Bereich maximaler Auslenkung der Seitenstütze 36, der je nach der Wucht des Seitenaufpralls variieren kann. Der Kopf 19 des Kindes 20 wird daher während seines Aufpralls 44 an die Seitenstütze 36 elastisch abgefedert, so dass die hierbei auftretende, maximale Seitenbeschleunigung des Kopfs 19 beträchtlich unterhalb des für Kinder kritischen Wertes liegt.

Darüber hinaus erfährt die hinausgebogene Seitenstütze 36 eine erhebliche Schrägstellung gegenüber der Sitzrichtung, so dass der anprallende Kopf 19 nach vorne umgelenkt wird, wie die strichpunktierte Linie 45 in Fig. 8 andeutet. Aus der Seitenbewegung des Kopfes 19 wird dadurch eine Vorverlagerung, die der Gurtstraffer des Dreipunktgurtes registriert und dadurch schließlich auffängt. Ein Großteil der bei einem Seitenauffahrunfall entstandenen Wucht kann daher für den Kopf 19 des Kindes völlig unschädlich über den Schultergurt eliminiert werden.

Eine ähnliche Funktion kann die seitliche Torso-Stütze 37 erfüllen, die jedoch mit einer größeren Federkonstante c ausgebildet sein kann, um das größere Gewicht des Oberkörpers des Kindes 20 etwa mit demselben Auslenkungsgrad auffangen zu können wie die seitlichen Kopfstützen 36.

**Patentansprüche**

1.  Fahrzeug-Kindersitz (1) mit einer Sitzfläche (2), einer Rückenlehne (4) und von dieser und/oder einer ggf. ausfahrbar daran angeordneten Kopfstütze (6) etwa parallel zueinander oder voneinander divergierend nach vorne vorspringenden, seitlichen Stützflächen (36, 37) für den Kopf (19) und/oder Torso (38) des Kindes (20), wobei an der Rückseite (21) der Rückenlehne (4) oder einer ggf. ausfahrbar daran angeordneten Kopfstütze (6) ein Element zur möglichst spielfreien Fixierung des Kindersitzes (1) an dem Fahrzeug (18), insbesondere einer fahrzeugeigenen Kopfstütze (23), angeordnet ist, so dass dem Kindersitz (1) allenfalls eine minimale Seitenbewegung gegenüber dem Fahrzeug (18) erlaubt ist; **dadurch gekennzeichnet, dass** die seitlichen Stützflächen (36, 37) für den Kopf (19) und/oder Torso (38) des Kindes (20) derart elastisch ausgebildet sind, dass ihr vorderer Bereich bei einem seitlichen, durch einen Seitenauffahrunfall bedingten Anprall des Kinderkopfs (19) und/oder -torsos (38) elastisch um einen Weg x in der Größenordnung von 5 bis 15 cm seitlich nachzugeben vermag, um die Wucht des Anpralls über einen größeren Zeitraum zu verteilen und dadurch den Spitzenwert der auftretenden Kräfte zu reduzieren.

2.  Kindersitz nach Anspruch 1, **dadurch gekennzeichnet, dass** an jeder Seite des Kindersitzes (1) voneinander getrennte Stützflächen (36, 37) für den Kopf (19) und den Torso (38) eines Kindes (20) vorgesehen sind.

3. Kindersitz nach Anspruch 1 oder 2, **dadurch gekennzeichnet, dass** das Fixierungselement als an die geometrischen Gegebenheiten eines Fahrzeugs (18) anpaßbar ausgebildet ist.

4. Kindersitz nach einem der Ansprüche 1 bis 3, **dadurch gekennzeichnet, dass** das Fixierungselement eine Kopfstütze (23) oder deren Verankerungssäule(n) (34) (gemeinsam) umgreifend ausgebildet ist.

5. Kindersitz nach einem der vorhergehenden Ansprüche, **dadurch gekennzeichnet, dass** das Fixierungselement als Gurt (22) ausgebildet ist.

6. Kindersitz nach einem der vorhergehenden Ansprüche, **dadurch gekennzeichnet, dass** die seitlichen Stützflächen (36, 37) des Kindersitzes (1) mit einem Verformungs-, Schwenk- und/oder Verstellbereich versehen sind, der bei einem seitlichen Anprall des Kindes (20) ein definiertes Zurückweichen der betreffenden Stützfläche (36, 37) erlaubt.

7. Kindersitz nach Anspruch 6, **dadurch gekennzeichnet, dass** der Verformungsbereich durch eine bereichsweise, querschnittliche Schwächung (41, 42) der Rückenlehnenschale (4) und/oder einer ggf. ausfahrbar daran angeordneten Kopfstütze (6) bzw. der Wandung eines diese bildenden Hohlkörpers definiert ist.

8. Kindersitz nach einem der vorhergehenden Ansprüche, **dadurch gekennzeichnet, dass** die seitlichen Stützflächen (36, 37) des Kindersitzes (1) über ein elastisches Element gegenüber der Rückenlehnenschale (4) und/oder einer ggf. ausfahrbar daran angeordneten Kopfstütze (6) abgestützt sind.

9. Kindersitz nach Anspruch 8, **dadurch gekennzeichnet, dass** das elastische Element durch die elastischen Werkstoffeigenschaften der Rückenlehnenschale (4) und/oder einer ggf. ausfahrbar daran angeordneten Kopfstütze (6) bzw. der Wandung (41, 42) eines diese bildenden Hohlkörpers realisiert ist.

10. Kindersitz nach einem der Ansprüche 8 oder 9, **dadurch gekennzeichnet, dass** die Federkonstante c = F/x des elastischen Elements zur Abstützung einer im Kopfbereich angeordneten Stützfläche (36) zwischen 5 und 40 kN/m liegt, vorzugsweise über 7,5 kN/m und/oder unter 30 kN/m, insbesondere über 10 kN/m und/oder unter 20 kN/m.

11. Kindersitz nach einem der Ansprüche 8 bis 10, **dadurch gekennzeichnet, dass** die Federkonstante c = F/x des elastischen Elements zur Abstützung einer im Torsobereich angeordneten Stützfläche (37) zwischen 10 und 140 kN/m liegt, vorzugsweise über 15 kN/m und/oder unter 100 kN/m, insbesondere über 20 kN/m und/oder unter 60 kN/m.

## Claims

1. Child car seat (1) with a seat surface (2), a backrest (4) and lateral support surfaces (36, 37) for the head (19) and/or torso (38) of the child (20) which project forwards approximately parallel to one another or diverging from one another from the backrest and/or a headrest (6) which is disposed on the latter and is optionally extensible, wherein an element for fixing the child seat (1) to the car (18), in particular a headrest (23) forming part of the car, as far as possible without play is disposed at the back (21) of the backrest (4) or a headrest (6) which is disposed on the latter and is optionally extensible, so that the child seat (1) is at most allowed a minimum lateral movement with respect to the car (18), **characterised in that** the lateral support surfaces (36, 37) for the head (19) and/or torso (38) of the child (20) are formed resiliently such that, in the event of the child's head (19) and/or torso (38) undergoing an impact caused by a side collision, their front area can yield laterally by a distance x in the order of magnitude of 5 to 15 cm in order to distribute the kinetic energy of the impact over a longer period and thereby reduce the peak value of the occurring forces.

2. Child seat according to Claim 1, **characterised in that** support surfaces (36, 37), which are separate from one another, for the head (19) and the torso (38) of a child (20) are provided on each side of the child seat (1).

3. Child seat according to Claim 1 or 2, **characterised in that** the fixing element is formed so as to be adaptable to the geometric conditions of a car (18).

4. Child seat according to any one of Claims 1 to 3, **characterised in that** the fixing element is formed so as to embrace a headrest (23) or the anchorage column(s) (34) thereof (together).

5. Child seat according to any one of the preceding Claims, **characterised in that** the fixing element is formed as a strap (22).

6. Child seat according to any one of the preceding Claims, **characterised in that** the lateral support surfaces (36, 37) of the child seat (1) are provided with a deformation, pivoting and/or displacement area which allows the support surface (36, 37) in question to yield in a defined manner in the event of the child (20) undergoing a lateral impact.

7. Child seat according to Claim 6, **characterised in that** the deformation area is defined by a cross-sectional weakening (41, 42) in certain areas of the backrest shell (4) and/or a headrest (6) which is disposed on the latter and is optionally extensible or the wall of a hollow body which forms this/these.

8. Child seat according to any one of the preceding Claims, **characterised in that** the lateral support surfaces (36, 37) of the child seat (1) are supported by way of a resilient element with respect to the backrest shell (4) and/or a headrest (6) which is disposed on the latter and is optionally extensible.

9. Child seat according to Claim 8, **characterised in that** the resilient element is obtained through the resilient material properties of the backrest shell (4) and/or a headrest (6) which is disposed on the latter and is optionally extensible or the wall (41, 42) of a hollow body which forms this/these.

10. Child seat according to either of Claims 8 and 9, **characterised in that** the spring constant c = F/x of the resilient element for supporting a support surface (36) which is disposed in the head area lies between 5 and 40 kN/m, preferably above 7.5 kN/m and/or below 30 kN/m, in particular above 10 kN/m and/or below 20 kN/m.

11. Child seat according to any one of Claims 8 to 10, **characterised in that** the spring constant c = F/x of the resilient element for supporting a support surface (37) which is disposed in the torso area lies between 10 and 140 kN/m, preferably above 15 kN/m and/or below 100 kN/m, in particular above 20 kN/m and/or below 60 kN/m.

**Revendications**

1. Siège enfant (1) pour véhicule automobile comportant une surface de siège (2), un dossier (4) et, à partir de celui-ci et/ou d'un appui-tête (6) disposé sur ledit dossier, le cas échéant rétractable, des surfaces d'appui (36, 37) latérales, dépassant vers l'avant, , à peu près parallèles l'une par rapport à l'autre ou divergeant l'une de l'autre, prévues pour la tête (19) et/ou le torse (38) de l'enfant (20), siège dans lequel , sur le dos (21) du dossier (4) ou d'un appui-tête (6) éventuellement rétractable de celuici, est disposé un élément de fixation, si possible sans jeu, du siège enfant (1) sur le véhicule (18), en particulier sur un appui-tête (23) propre au véhicule, de façon à permettre, tout au plus, un déplacement latéral minimum du siège enfant (1) par rapport au véhicule (18), **caractérisé en ce que** les surfaces d'appui latérales (36, 37), prévues pour la tête (19) et/ou le torse (38) de l'enfant (20) ont une élasticité telle que, dans le cas d'un choc latéral, dû à une collision par tamponnement latéral, de la tête de l'enfant (19) et/ou du torse de l'enfant (38), leur partie avant puisse s'affaisser latéralement de façon élastique sur une distance x d'un ordre de grandeur de 5 à 15 cm, afin de répartir la force du choc sur une durée plus grande et, ainsi, de réduire la valeur maximale des forces produites.

2. Siège enfant selon la revendication 1, **caractérisé en ce que**, de chaque côté du siège enfant (1), des surfaces d'appui (36, 37) séparées l'une de l'autre sont prévues pour la tête (19) et le torse (38) d'un enfant (20).

3. Siège enfant selon la revendication 1 ou 2, **caractérisé en ce que** l'élément de fixation est réalisé de façon à pouvoir être adapté aux données géométriques d'un véhicule (18).

4. Siège enfant selon l'une des revendications 1 à 3, **caractérisé en ce que** l'élément de fixation est réalisé de façon à enserrer un appui-tête (23) ou son (ses) montant(s) d'ancrage (34).

5. Siège enfant selon l'une des revendications précédentes, **caractérisé en ce que** l'élément de fixation est réalisé comme.une sangle (22).

6. Siège enfant selon l'une des revendications précédentes, **caractérisé en ce que** les surfaces d'appui latérales (36, 37) du siège enfant (1) comportent une zone de déformation, de pivotement et/ou d'ajustement qui, lors d'un choc latéral de l'enfant (20), permet un retrait défini de la surface d'appui (36, 37) concernée.

7. Siège enfant selon la revendication 6, **caractérisé en ce que** la zone de déformation est définie par un affaiblissement (41, 42) transversal, par zone, de la coque de dossier (4) et/ou d'un appui-tête (6) éventuellement rétractable, disposé sur ladite coque, ou bien de la paroi d'un corps creux formant celle-ci.

8. Siège enfant selon l'une des revendications précédentes, **caractérisé en ce que** les surfaces d'appui latérales (36, 37) du siège enfant (1) prennent appui, par un moyen élastique, sur la coque de dossier (4) et/ou sur un appui-tête (6) éventuellement rétractable, de celle-ci .

9. Siège enfant selon la revendication 8, **caractérisé en ce que** le moyen élastique est réalisé par les propriétés élastiques du matériau de la coque de dossier (4) et/ou d'un appui-tête (6) éventuellement rétractable, disposé sur ladite coque, ou bien de la paroi (41, 42) d'un corps creux formant celle-ci.

10. Siège enfant selon l'une des revendication 8 ou 9, **caractérisé en ce que** la constante élastique c = F/x du moyen élastique de soutien d'une surface d'appui (36) disposée au niveau de la tête, se situe entre 5 kN/m et 40 kN/m, de préférence au-dessus de 7,5 kN/m et/ou au-dessous de 30 kN/m, en particulier au-dessus de 10 kN/m et/ou au-dessous de 20 kN/m.

11. Siège enfant selon l'une des revendication 8 à 10, **caractérisé en ce que** la constante élastique c = F/x du moyen élastique de soutien d'une surface d'appui (37) disposée au niveau du torse, se situe entre 10 kN/m et 140 kN/m, de préférence au-dessus de 15 kN/m et/ou au-dessous de 100 kN/m, en particulier au-dessus de 20 kN/m et/ou au-dessous de 60 kN/m.

FIG. 1

FIG. 2

FIG. 3

FIG. 4

FIG. 5

FIG. 6

18 34 22 31 34 23 6 12

16

14

1

13

36

15

3

10

FIG. 7

38 19 20 2

6 12

36

36

FIG. 8

18 45 44 19 1 2 3 10